# EUROPEAN PATENT APPLICATION

(11) **EP 4 071 916 A1**
(43) Date of publication of application: **12.10.2022**
(21) Application number: 22165653.1
(22) Date of filing: 30.03.2022
(51) Int. Cl.: H01M 50/403, H01M 50/42, H01M 50/423, H01M 50/426, H01M 50/434, H01M 50/446, H01M 50/449

(54) **COMPOSITE POROUS SEPARATOR, MANUFACTURING METHOD THEREOF AND ELECTROCHEMICAL DEVICE USING THE SAME**

(30) Priority: 02.04.2021 KR 20210043285
(71) Applicant: SK Innovation Co., Ltd., Seoul 03188 (KR); SK ie technology Co., Ltd., Jongno-gu Seoul 03188 (KR)
(72) Inventor: CHO, Kyu Young, 34124 Daejeon (KR); KIM, Yun Bong, 34124 Daejeon (KR)
(74) Representative: Stolmár & Partner Patentanwälte PartG mbB

(57) **Abstract**

The present invention relates to a composite porous separator, a method of manufacturing the same, and an electrochemical device including the same. Provided is a porous substrate that has excellent heat resistance and heat shrinking properties, a small thickness, and high strength even when a thickness of a coating layer containing inorganic particles is small. Provided are a composite porous separator having significantly reduced heat shrinking and curls according to the present invention, and an electrochemical device using the same.

## Description

### CROSS-REFERENCE TO RELATED APPLICATIONS

This application claims priority under 35 U.S.C. §119 to Korean Patent Application No. 10-2021-0043285, filed on April 2, 2021, in the Korean Intellectual Property Office, the disclosure of which is incorporated herein by reference in its entirety.

### TECHNICAL FIELD

The following disclosure relates to a composite porous separator, a method of manufacturing the same, and an electrochemical device using the same.

### BACKGROUND

Recently, in accordance with the expansion of the range of lithium secondary batteries used in vehicles (hybrid electric vehicle (HEV) and plug-in hybrid electric vehicle (PHEV)) and energy storage devices, the demand for a high capacity, a high output, high safety, and a long lifespan has increased. Research and development have been actively conducted to satisfy required properties for a novel separator to satisfy the required properties of the lithium secondary battery, such as thermal stability, improved mechanical properties, and improved affinity with an electrolyte.

In particular, in order to suppress instability of the battery caused by heat shrinking and dendrite growth due to a high temperature, a ceramic-coated separator that may provide a function of suppressing a shrinkage rate of a substrate by inorganic particles and may implement a safer separator by an inorganic coating layer by coating one or both surfaces of a porous separator substrate with inorganic particles and a binder is disclosed.

However, in a case of a ceramic-coated separator according to the related art, it is difficult to achieve a thinness at which a lifespan of a lithium secondary battery may be improved, and specifically, in a case where a porous substrate and an inorganic particle coating layer are made thinner, a density of the inorganic particles in the coating layer is reduced, which causes deterioration of heat resistance.

In addition, in a case where a thin porous substrate is used, a high-strength material is selected to suppress deterioration of mechanical properties, and in this case, a shrinking force of the substrate is larger than that of the coating layer, resulting in an increase in the occurrence of curls.

When a process of removing moisture is relaxed to suppress the occurrence of the curls in a product in which the coating layer is formed on one surface of the porous substrate, a content of moisture of the inorganic particles is increased to induce degradation of an active material, and internal resistance of the battery is thus increased, which causes deterioration of a capacity and a lifespan of the battery. Furthermore, in a case where the coating layer is formed on both surfaces of the porous substrate to suppress the occurrence of the curls, the inorganic particles in the coating layer are not sufficiently densely packed, resulting in additional deterioration of the heat resistance.

Therefore, there is a demand for a separator that may be thinner than a separator according to the related art, has excellent heat resistance, suppresses the occurrence of curls, and has a low content of moisture.

### [Related Art Document]

### [Patent Document]

(Patent Document 1) Korean Patent Publication No. 10-1536560 (July 8, 2015)

### SUMMARY

An embodiment of the present invention is directed to providing a composite porous separator that has excellent heat resistance and excellent heat shrinking properties and suppresses the occurrence of curls, and a method of manufacturing the same.

Another embodiment of the present invention is directed to providing a composite porous separator that suppresses deterioration of heat resistance and the occurrence of curls, has a significantly reduced heat shrinkage rate, and has a low content of moisture in a composite porous separator to be finally manufactured even when a thickness of a coating layer containing inorganic particles is small.

Still another embodiment of the present invention is directed to providing an electrochemical device including the composite porous separator.

Still another embodiment of the present invention is directed to providing a method of manufacturing the composite porous separator.

In one general aspect, a composite porous separator includes: a porous substrate; and a coating layer that is formed on one or both surfaces of the porous substrate and contains two or more kinds of inorganic particles having different sizes and a binder, wherein the binder contains a polymer having a glass transition temperature (Tg) of 100°C to 200°C.

The inorganic particles may include first inorganic particles having an average particle diameter (A) of 0.5 to 2 µm, and second inorganic particles having an average particle diameter of A/2 to A/8 of the average particle diameter (A) of the first inorganic particles.

In the inorganic particles, the first inorganic particles may be included in an amount of 10 to 40 wt%, and the second inorganic particles may be included in an amount of 60 to 90 wt%.

A packing density of the inorganic particles may be 1.10 g/m²·µm or more, specifically, 1.10 to 1.80 g/m²·µm, and more specifically, 1.10 to 1.50 g/m²·µm.

A puncture strength of the porous substrate may be 3.5 kg·m·s⁻² or more.

The polymer may be one or a mixture of two or more selected from an ester-based polymer, a polyamide-based polymer, a polyimide-based polymer, an acrylic polymer, a vinyl alcohol-based polymer, and a vinyl pyrrolidone-based polymer.

In the coating layer, the inorganic particles and the binder may be contained in amounts of 50 to 99.9 wt% and 0.1 to 50 wt%, respectively, with respect to a total weight of the coating layer.

A thickness of the coating layer may be a thickness of B/2 to B/20 of a thickness (B) of the porous substrate.

A thickness of the coating layer may be 0.1 to 10 µm.

A shrinkage rate in a longitudinal direction (MD) or a shrinkage rate in a transverse direction (TD) at 170°C of the composite porous separator may be within 5%.

In another general aspect, an electrochemical device includes the composite porous separator.

In still another general aspect, there is provided a method of manufacturing the composite porous separator.

A method of manufacturing a composite porous separator includes: mixing two or more kinds of inorganic particles having different sizes with a polymer having a glass transition temperature (Tg) of 100°C to 200°C to prepare a coating composition; and applying the coating composition onto one or both surfaces of a porous substrate and drying the coating composition to form a coating layer.

The inorganic particles may include first inorganic particles having an average particle diameter (A) of 0.5 to 2 µm, and second inorganic particles having an average particle diameter of A/2 to A/8 of the average particle diameter (A) of the first inorganic particles.

Other features and aspects will be apparent from the following detailed description, the drawings, and the claims.

### BRIEF DESCRIPTION OF THE DRAWINGS

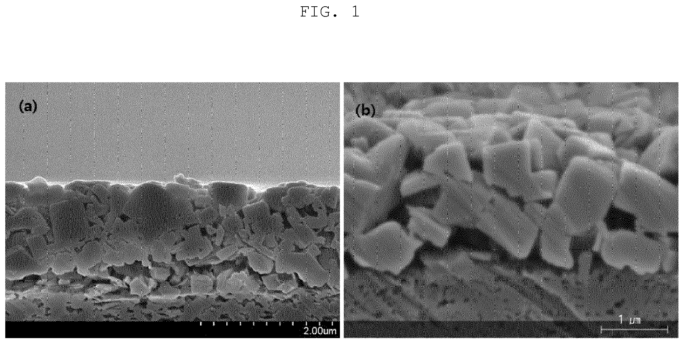

FIGS. 1A and 1B are SEM photographs of cross sections of coating layers of composite porous films manufactured in Example 1 and Comparative Example 4 of the present invention.

### DETAILED DESCRIPTION OF EMBODIMENTS

Hereinafter, the present invention will be described in more detail with reference to exemplary embodiments including the accompanying drawings.

However, each of the following Examples or Comparative Examples is merely one reference example for describing the present invention in detail, and the present invention is not limited thereto and may be implemented in various forms.

In addition, unless otherwise defined, all the technical terms and scientific terms have the same meanings as commonly understood by those skilled in the art to which the present invention pertains.

The terms used in the description of the present invention are merely used to effectively describe a specific exemplary embodiment, but are not intended to limit the present invention.

In addition, unless the context clearly indicates otherwise, the singular forms used in the specification and the scope of the appended claims are intended to include the plural forms.

In addition, unless explicitly described to the contrary, "comprising" any components will be understood to imply further inclusion of other components rather than the exclusion of any other components.

The term "inorganic particles" used in the present invention is used to include "first inorganic particles" and "second inorganic particles".

The term "average particle diameter" used in the present invention refers to an average particle diameter (D50)" of the inorganic particles, and may be defined as a diameter based on 50% of a particle diameter distribution.

The present invention for achieving the above object provides a composite porous separator, a method of manufacturing the same, and an electrochemical device using the same.

The present inventors have intensively conducted studies on a separator that has heat resistance and shrinking resistance and suppresses the occurrence of curls.

The present inventors have found that the effects described above may be implemented by applying, to a porous substrate, a coating composition using two or more kinds of inorganic particles having different sizes and a polymer having a glass transition temperature (Tg) of 100°C to 200°C as a binder, thereby completing the present invention.

In addition, the present inventors have found that the effects described above may be specifically implemented by applying, to a porous substrate, a coating composition using two or more kinds of inorganic particles having different sizes and a polymer having a glass transition temperature (Tg) of 100°C to 200°C and a weight average molecular weight (Mw) of 100,000 to 1,000,000 g/mol as a binder, thereby completing the present invention.

More specifically, the present inventors have found that in a case where a coating composition using two or more kinds of inorganic particles having different sizes and a polymer having a glass transition temperature (Tg) of 100°C to 200°C and/or a weight average molecular weight (Mw) of 100,000 to 1,000,000 g/mol as a binder, even when the coating composition is applied to one or both surface of a porous substrate or a high-strength porous substrate, for example, a porous substrate having a puncture strength of 3.5 kg·m·s⁻² (= 3.5 N) or more, the occurrence of curls is significantly suppressed, heat resistance is improved, a heat shrinkage rate is reduced, and a content of moisture generated in a separator to be finally manufactured is low, which may prevent deterioration of a lifespan of a battery and stability due to depletion of an electrolyte and deterioration of electrodes, thereby completing the present invention.

Hereinafter, a composite porous separator according to the present invention and an electrochemical device including the same will be described in detail.

The composite porous separator according to the present invention may include a porous substrate, and a coating layer that is formed on one or both surfaces of the porous substrate and contains two or more kinds of inorganic particles having different sizes and a binder. In the binder, a polymer having a glass transition temperature (Tg) of 100°C to 200°C, and specifically, a glass transition temperature (Tg) of 100°C to 200°C and a weight average molecular weight of 100,000 to 1,000,000 g/mol may be used.

The porous substrate may be used without limitation as long as it is commonly used in a separator of a secondary battery, and specifically, the porous substrate may be a porous resin film, a woven fabric, a non-woven fabric, or the like.

A material of the porous substrate is not limited, and specifically, the porous substrate may be formed of, for example, one or a mixture of two or more selected from the group consisting of polyethylene, polypropylene, polybutylene, polypentene, polymethylpentene, polyethylene terephthalate, polybutylene terephthalate, polyacetal, polyamide, polycarbonate, polyimide, polyethersulfone, polyphenylene oxide, polyphenylene sulfide, polyethylene naphthalene, and a copolymer thereof.

A puncture strength of the porous substrate may be 3.5 kg·m·s⁻² or more, specifically, 3.9 kg·m·s⁻² or more, more specifically, 4.4 kg·m·s⁻² or more, and still more specifically, 4.9 kg·m·s⁻² or more. An upper limit thereof is not limited, and may be, for example, 10 kg·m·s⁻² or more. In a case where the porous substrate has a puncture strength in the above range, thinness of the porous substrate may be facilitated, and mechanical strength of the composite porous separator is improved, which may be more preferable.

Usually, in a case where an inorganic particle coating layer is formed on the surface of the porous substrate using a porous substrate having a high puncture strength, curls may occur. However, in the present invention, even in a case where the surface of the porous substrate having a high puncture strength as described above is coated using the inorganic particle coating composition having the constituent elements, curls do not occur. In addition, in a case where the coating layer of the present invention is formed, a puncture strength equal to or higher than the puncture strength of the porous substrate may be obtained. Therefore, curls do not occur, and a composite separator having a high puncture strength may be manufactured, which is more preferable.

A thickness of the porous substrate is not limited, and may be, 1 to 100 µm, specifically, 5 to 50 µm, and more specifically, 6 to 30 µm.

The coating layer may contain two or more kinds of inorganic particles having different sizes and a binder.

The two or more kinds of inorganic particles having different sizes may include first inorganic particles having an average particle diameter (A) of 0.5 to 2 µm, and second inorganic particles that are smaller than the first inorganic particles and have an average particle diameter of A/2 to A/8 of the average particle diameter (A) of the first inorganic particles. When a thin and high-strength porous substrate is coated using a mixture of two kinds of inorganic particles within the above range, a coating layer that is denser and thinner may be formed, and a separator that has heat resistance and suppresses the occurrence of curls may be provided, which is more preferable.

The first inorganic particles may be included in an amount of 10 to 40 wt% with respect to the total inorganic particles, and the second inorganic particles may be included in an amount of 60 to 90 wt% with respect to the total inorganic particles. In a case where the first inorganic particles and the second inorganic particles in the above ranges are included, mechanical stability may be improved and further improved heat resistance may be implemented, which is preferable. In addition, a coating layer that is denser and thinner may be formed, and a separator that has improved heat resistance and suppresses the occurrence of curls may be provided, which is more preferable. In addition, the puncture strength may be further improved, which is preferable.

The kind of the inorganic particle is not limited, and specifically, may be one or a mixture of two or more selected from boehmite, zinc oxide (ZnO), magnesium oxide (MgO), zirconia (ZrO₂) , silica (SiO₂), titania (TiO₂), cerium oxide (CeO₂), aluminum oxide (Al₂O₃), magnesium hydroxide (Mg(OH)₂), aluminum hydroxide (Al(OH)₃), calcium carbonate (CaCO₃), and barium carbonate (BaCO₃).

A packing density of the inorganic particles in the coating layer may be 1.10 g/m²·µm or more, specifically, 1.10 to 1.80 g/m²·µmmore specifically, 1.10 to 1.50 g/m²·µm, and still more specifically, 1.30 to 1.48 g/m²·µm. In this case, the packing density of the inorganic particles in the coating layer is a value obtained by dividing a weight (g) per unit area (m²) of the coating layer by the thickness (µm) of the coating layer, and may be defined as g/m²·µm.

In the packing density in the above range, a uniform and dense coating layer may be formed, heat resistance of the manufactured separator may be further improved, and mechanical stability and strength of the separator may be further improved, which may be preferable. Furthermore, the separator may have a low content of moisture of less than 800 ppm, and specifically 600 ppm or less after being left under conditions of 40°C and a relative humidity of 90% for 12 hours. Therefore, a content of moisture to be reabsorbed is controlled to be significantly low, such that a lifespan and operational stability of a battery are improved, which may be more preferable.

The binder may perform a function of further improving heat resistance in addition to a function of connecting and stably fixing the inorganic particles. A glass transition temperature (Tg) of the binder may be, specifically, 100°C to 200°C, and specifically 130°C to 180°C. A weight average molecular weight of the binder is not particularly limited as long as the present invention is achieved, and for example, the binder may contain a polymer having a weight average molecular weight (Mw) of 100,000 to 1,000,000 g/mol, and specifically 250,000 to 800,000 g/mol. However, the present invention is not limited thereto.

In a case where a polymer having the glass transition temperature (Tg) in the above range is used, even when a small amount of binder is used, a binding force for connecting and fixing the inorganic particles in the coating layer may be further improved, a thinner coating layer may be formed, durability and heat resistance may be excellent, and thus, mechanical properties and heat resistance of the coating layer may be further improved, which is preferable.

Furthermore, heat shrinking and the occurrence of curls of the porous substrate may be suppressed, and thus, mechanical properties such as flexibility and elasticity of the coating layer may be further improved, which may be more preferable.

In addition, when a thin coating layer is formed using the two kinds of inorganic particles having different sizes, more excellent heat resistance and adhesive strength, and an increase in puncture strength may be exhibited.

When the glass transition temperature is lower than 100°C, heat resistance is deteriorated, shrinking may occur, and a coating thickness needs to be large to prevent the shrinking. As a result, it is difficult to provide a thin separator.

Any kind of binder may be used without limitation as long as it is a polymer satisfying the physical properties described above, and specific examples thereof include one or a mixture of two or more selected from an ester-based polymer, an amide-based polymer, an imide-based polymer, an acrylic polymer, a styrene-based polymer, a vinyl alcohol-based polymer, a vinyl pyrrolidone-based polymer, and a fluorine-based polymer.

The ester-based polymer may be selected from polyethylene terephthalate, polyethylene naphthalate (PEN), and the like. The amide-based polymer may be selected from polyamide-6, polyamide-66, and the like.

The imide-based polymer may be selected from polyimide, polyether imide, polyester imide, and the like.

As a specific example, the acrylic polymer may be selected from polyacrylamide, polymethacrylate, polyethylacrylate, polyacrylate, polybutyl acrylate, sodium polyacrylate, an acrylic acid-methacrylic acid copolymer, and the like.

As a specific example, the styrene-based polymer may be selected from polystyrene, polyalpha-methylstyrene, polybromostyrene, and the like.

As a specific example, the vinyl alcohol-based polymer may be selected from polyvinyl alcohol, polyvinyl acetate, a polyvinyl acetate-polyvinyl alcohol copolymer, and the like. As a specific example, the vinyl pyrrolidone-based polymer may be selected from a copolymer including polyvinylpyrrolidone and vinylpyrrolidone, and the like.

As a specific example, the fluorine-based polymer may be, but is not limited to, one or a mixture of two or more selected from polyvinylidene fluoride, polytetrafluoroethylene, polyhexafluoropropylene, hexafluoropropylene, polyfluoride-hexafluoropropylene, and polychlorotrifluoroethylene.

The coating layer may be formed on one or both surfaces of the porous substrate, and in a case where the strength of the porous substrate is higher than that of a porous substrate having the same thickness, it may be preferable to form a double-sided coating layer.

In the coating layer, the inorganic particles and the binder may be contained in amounts of 50 to 99.9 wt% and 0.1 to 50 wt%, respectively, with respect to the total weight of the coating layer, and specifically, may be contained in amounts of 80 to 99 wt% and 1 to 20 wt%, respectively, with respect to the total weight of the coating layer.

A thickness of the coating layer may be a thickness of B/2 to B/20 of a thickness (B) of the porous substrate, and specifically a thickness of B/4 to B/9 of the thickness (B) of the porous substrate. The thickness of the coating layer may be, but is not limited to, 0.1 to 10 µm, specifically, 0.5 to 10 µm, more specifically, 0.8 to 5 µm, and still more specifically, 1.0 to 3 µm.

The composite porous separator according to the present invention includes the coating layer formed on one or both surfaces of the porous substrate, such that heat resistance may be excellent, the occurrence of curls may be suppressed, a shrinkage rate at a high temperature may be reduced, and a puncture strength may be increased.

A shrinkage rate in a longitudinal direction (MD) or a shrinkage rate in a transverse direction (TD) at 170°C of the composite porous separator may be within 5%, specifically, within 4.6%, more specifically, within 4.0%, and still more specifically, within 3.8%. It is preferable that the shrinkage rate in the longitudinal direction (MD) or the shrinkage rate in the transverse direction (TD) is lower. The shrinkage rate in the longitudinal direction (MD) or the shrinkage rate in the transverse direction (TD) may be, for example, 1% or more, and a limit thereof is not limited.

The electrochemical device according to an exemplary embodiment of the present invention may include the composite porous separator, and more specifically, may include a cathode, an anode, and the composite porous separator according to the present invention interposed between the cathode and the anode. The cathode and the anode may be produced in a form in which an electrode active material is bound to an electrode current collector according to a common method known in the art. As a non-limiting example of a cathode active material of the electrode active material, a common cathode active material that may be used for a cathode of an electrochemical device according to the related art may be used, and in particular, lithium manganese oxide, lithium cobalt oxide, lithium nickel oxide, lithium iron oxide, or a lithium composite oxide obtained by combining these lithium oxides may be specifically used. As a non-limiting example of the anode active material of the electrode active material, any common anode active material that may be used for an anode of the electrochemical device according to the related art may be used, in particular, lithium intercalation materials such as a lithium metal or a lithium alloy, carbon, petroleum coke, activated carbon, graphite, and other carbonaceous materials may be specifically used.

Non-limiting examples of the cathode current collector of the electrode current collector include a foil formed of aluminum, nickel, or a combination thereof, and non-limiting examples of the anode current collector include a foil formed of copper, gold, nickel, a copper alloy, or a combination thereof.

The electrochemical device may include all devices in which electrochemical reactions occur, and specifically, examples thereof include all kinds of primary and secondary batteries, fuel cells, solar cells, and capacitors such as a super capacitor. In particular, among the secondary batteries, lithium secondary batteries including a lithium metal secondary battery, a lithium ion secondary battery, a lithium polymer secondary battery, and a lithium ion polymer secondary battery may be preferable. However, the present invention is not limited thereto.

Hereinafter, a method of manufacturing a composite porous separator according to the present invention will be described in detail.

The method of manufacturing a composite porous separator may include: mixing two or more kinds of inorganic particles having different sizes with a polymer having a glass transition temperature (Tg) of 100°C to 200°C to prepare a coating composition; and applying the coating composition onto one or both surfaces of a porous substrate and drying the coating composition to form a coating layer.

In the preparing of the coating composition, the coating composition may further contain a solvent. The solvent is not limited as long as it may dissolve or disperse the binder, specifically, the solvent may be one or a mixed solvent of two or more selected from water, ethanol, acetone, tetrahydrofuran, methylene chloride, chloroform, dimethylformamide, N-methyl-2-pyrrolidone (NMP), and cyclohexane, and the inorganic particle and the polymer may be the same as those described above.

In the forming of the coating layer, the coating layer may be formed by applying the coating composition onto one or both surfaces of the porous substrate and drying the coating composition.

The application method is not limited, and various methods such as dip coating, die coating, gravure coating, comma coating, slit coating, and a mixed method thereof may be used.

The drying may be performed by drying with warm air, hot air, or low humidified air, vacuum drying, or an irradiation method using far infrared rays, electron beams, or the like, and specifically, the drying may be performed by hot air drying at a temperature of 30°C to 120°C.

First inorganic particles and second inorganic particles are densely packed with each other in the coating layer, such that a content of a binder in the coating layer may be reduced, and thus, an improved porosity may be implemented and curls and shrinking may be suppressed. In addition, the binder contains a polymer having a glass transition temperature (Tg) of 100°C to 200°C, such that more excellent heat resistance may be obtained and curls and shrinking may be suppressed, which may be more preferable.

Furthermore, due to the above characteristics, the composite porous separator may have a larger area and be easy to handle, which may implement an electrochemical device having a high output, a high capacity, and a long lifespan. Therefore, the composite porous separator may be more preferable for an application as a high-capacity energy storage device. Hereinafter, the present invention will be described in more detail with reference to Examples and Comparative Examples. However, the following Examples and Comparative Examples are only examples for describing the present invention in more detail, and the present invention is not limited by the following Examples and Comparative Examples.

### [Experimental Method]

### 1. Heat Shrinking Properties

A heat shrinkage rate at 170°C of the separator was measured according to the ASTM D1204 standard.

### 2. Confirmation of The occurrence of Curls

The separator was cut into a width of 10 cm × a length of 20 cm to prepare a sample, the sample was placed so that a coating surface of the sample was directed downward, the sample was left at 25°C for 10 minutes, and then, evaluation was performed as follows.
O: No occurrence of curls
Δ: Occurrence of curls at a part of the sample
X: Occurrence of curls in the entire the sample

### 3. Packing Density

A packing density of the coating layer was calculated by dividing a weight (g/m²) per unit area of the coating layer formed on the porous substrate by a thickness (µm) of the coating layer (unit: g/m²·µm.

### 4. Puncture Strength

The edge of the manufactured separator was fixed with a donut-shaped frame, and the maximum load was measured when the central exposed region of the spherical separator having a diameter of 15 mm was punched at a rate of 2 mm/sec with a cemented carbide needle having a diameter of 1.0 mm with a spherical tip (radius of curvature (R): 0.5 mm).

### 5. Glass Transition Temperature

Analysis was performed by a differential scanning calorimeter (DSC) (DSC-822E, manufactured by Mettler Toledo). As analysis conditions of the binder resin, the solvent was removed, the temperature of 5 mg of the solidified sample was raised at a scanning rate of 10 °C/min under nitrogen conditions until the resin was completely dissolved to completely melt the sample, the temperature was lowered at 10 °C/min to completely solidify the sample, the temperature was raised again to 10°C, and a glass transition temperature was measured.

### 6. Weight Average Molecular Weight

A weight average molecular weight of the resin used as a binder was measured using GPC (GPC Reflective Index detector, EcoSEC HLC-8320, manufactured by Tosoh Corporation), TSKgel guard PWxl, and two columns of TSKgel GMPWxl and TSKgel G2500PWxl (7.8 × 300 mm) were connected and used as a GPC column, a 0.1 M NaNO₃ aqueous solution was used as a solvent, polysaccharide was used as a standard, and analysis was performed at 40°C and a flow rate of 1 mL/min.

### 7. Average Particle Diameter

An average particle diameter of the inorganic particles was measured using S3500 manufactured by Microtrac.

### [Kinds of Binders]

Binder A: Polybutyl acrylate (PA) having a glass transition temperature (Tg) of -50°C and a weight average molecular weight (Mw) of 400,000 g/mol
Binder B: Ethylene acrylic acid copolymer (EAA) having a glass transition temperature (Tg) of 0°C and a weight average molecular weight (Mw) of 50,000 g/mol
Binder C: Polyacrylamide (PAM) having a glass transition temperature (Tg) of 134°C and a weight average molecular weight (Mw) of 300,000 g/mol
Binder D: Polyacrylamide (PAM) having a glass transition temperature (Tg) of 174°C and a weight average molecular weight (Mw) of 400,000 g/mol
Binder E: Polyacrylamide (PAM) having a glass transition temperature (Tg) of 174°C and a weight average molecular weight (Mw) of 600,000 g/mol
Binder F: Polyacrylamide (PAM) having a glass transition temperature (Tg) of 80°C and a weight average molecular weight (Mw) of 400,000 g/mol
Binder G: Polyacrylamide (PAM) having a glass transition temperature (Tg) of 120°C and a weight average molecular weight (Mw) of 1,120,000 g/mol

### [Example 1]

### <Preparation of Coating Composition>

96 wt% of a boehmite mixture obtained by mixing boehmite particles having an average particle diameter of 0.8 µm as first inorganic particles and boehmite particles having an average particle diameter of 0.38 µm as second inorganic particles at a weight ratio of 20:80 and 4 wt% of the binder D were mixed and used, and the mixture was diluted with water so that the total solid content was 20 wt%, thereby preparing a coating composition.

### <Manufacturing of Composite Porous Separator>

A polyethylene-based porous substrate (ENPSS, manufactured by SK ie technology Co., Ltd.) having a puncture strength of 4.9 kg·m·s⁻²and a thickness of 9 µm was used as a porous substrate, the coating composition was applied onto both surfaces of the porous substrate at a rate of 10 m/min at a uniform thickness, the coating composition was dried while the porous substrate was passed through a dryer having a length of 6 m with hot air at 45°C discharged therefrom at a rate of 10 m/min, and the porous substrate was wound into a roll shape.

### [Examples 2 and 3]

A composite porous separator was manufactured in the same manner as that of Example 1, except that the coating composition as shown in Table 1 was used.

### [Comparative Examples 1 to 6]

A composite porous separator was manufactured in the same manner as that of Example 1, except that the coating composition, the type of the porous substrate, and the thickness of the coating layer in Example 1 were as shown in Table 1.

The coating compositions used in the coating layers and the physical properties of the manufactured composite porous separators of Examples and Comparative Examples are shown in Table 1.

**[Table 1]**

| | | | | Example | | | Comparative Example | | | | | |
|---|---|---|---|---|---|---|---|---|---|---|---|---|
| | | | | 1 | 2 | 3 | 1 | 2 | 3 | 4 | 5 | 6 |
| Coating composition | | Binder | Kind | D | C | E | A | A | B | D | F | G |
| | | | Tg (°C) | 174 | 134 | 174 | -50 | -50 | 0 | 174 | 80 | 120 |
| | | | Mw (g/mol) | 400,000 | 300,000 | 600,000 | 400,000 | 400,000 | 50,000 | 400,000 | 400,000 | 1,120,00 0 |
| | | | Material | PAM | PAM | PAM | PA | PA | EAA | PAM | PAM | PAM |
| | | First inorganic particles: second inorganic particles (weight ratio) | | 20:80 | | | 100:0 | 20:80 | 31:69 | 100:0 | 100:0 | 100:0 |
| Coating layer thickness (µm) | | | | 1.5/1.5 | | | 3 | 3 | 3 | 1.5 /1.5 | 3 | 3 |
| Coating layer packing density (g/m²·µm) | | | | 1.293 | 1.291 | 1.287 | 1.187 | 1.323 | 1.185 | 0.974 | 1.192 | 1.191 |
| Substrate | Thickness (µm) | | | 9 | 9 | 9 | 9 | 9 | 9 | 9 | 9 | 9 |
| | Puncture strength (kg·m·s⁻²) | | | 4.9 | 4.9 | 4.9 | 3.43 | 3.43 | 3.43 | 4.9 | 4.9 | 4.9 |
| First inorganic particles: Boehmite having average particle diameter of 0.8 µm | | | | | | | | | | | | |
| Second inorganic particles: Boehmite having average particle diameter of 0.38 µm | | | | | | | | | | | | |
| * PAM: Polyacrylamide | | | | | | | | | | | | |
| * PA: Polybutyl acrylate | | | | | | | | | | | | |
| * EAA: Ethylene acrylic acid copolymer | | | | | | | | | | | | |

The characteristics of the composite porous separators of Examples and Comparative Examples were evaluated. The results are shown in Table 2.

**[Table 2]**

| | | Example | | | Comparative Example | | | | | |
|---|---|---|---|---|---|---|---|---|---|---|
| | | 1 | 2 | 3 | 1 | 2 | 3 | 4 | 5 | 6 |
| Heat shrinkage rate (%) 170°C | MD | 3.1 | 3.7 | 2.0 | 40.0 | 36.2 | 41.5 | 39.0 | 73.8 | 44.1 |
| | TD | 4.1 | 4.5 | 2.7 | 43.0 | 39.5 | 45.8 | 46.0 | 45.7 | 48.3 |
| Puncture strength (kg·m·s⁻²) | | 4.9 | 4.9 | 4.9 | 3.43 | 3.43 | 3.43 | 4.9 | 4.9 | 4.9 |
| Curl the occurrence characteristics | | ○ | ○ | ○ | △ | △ | △ | ○ | × | × |

As illustrated in FIGS. 1A and 1B, it was confirmed that in the case of the coating layer of Example 1 in which the mixture of two kinds of inorganic particles was used, the packing density was increased, in particular, the density of the inorganic particles at the surface portion of the coating layer was high, in comparison to the coating layer of Comparative Example 4 in which one kind of inorganic particle was used.

As shown in Tables 1 and 2, it was confirmed that in the cases of Examples 1 to 3, the heat shrinking was significantly reduced at a high temperature, curls did not occur, and the heat resistance was excellent, even when the high-strength substrate was used. On the other hand, it was confirmed that in the cases of Comparative Examples 4 to 6 in which the high-strength substrate was used, the heat shrinking was large, and the curls occurred. In particular, it was confirmed that in the cases of Comparative Examples 1 to 3 in which the polymer having a low glass transition temperature was used as a binder, the heat shrinkage rate was greater than 10 times or more than those in Examples, and the curls occurred. In addition, it was confirmed that in the cases of Comparative Examples 1 to 3 in which the low-strength substrate was used, the heat shrinking was large, and the curls occurred. Further, it was confirmed that in the cases of Comparative Examples 4 to 6 in which one kind of inorganic particle was used, the packing density of the inorganic particles in the coating layer was reduced, and the heat resistance was significantly deteriorated.

As set forth above, the composite porous separator according to the present invention has improved heat resistance, suppresses the occurrence of curls and wrinkles at a high temperature during a high-temperature heat treatment step and an operation step in a manufacturing process, has a significantly low heat shrinkage rate, and prevents a content of moisture from increasing due to re-absorption during water-based coating. Therefore, the composite porous separator according to the present invention may improve lifespan characteristics, an operation, and use stability of a battery. Further, the composite porous separator may implement an electrochemical device having a low heat shrinkage rate due to excellent heat stability, dense packing, a larger area, excellent charging and discharging cycle characteristics, and a high capacity, and a long lifespan.

Hereinabove, although the present invention has been described by specific matters, limited exemplary embodiments, and drawings, they have been provided only for assisting in the entire understanding of the present invention. Therefore, the present invention is not limited to the exemplary embodiments. Various modifications and changes may be made by those skilled in the art to which the present invention pertains from this description.

Therefore, the spirit of the present invention should not be limited to the described exemplary embodiments, but the claims and all modifications equal or equivalent to the claims are intended to fall within the spirit of the present invention.

## Claims

1. A composite porous separator comprising:
a porous substrate; and
a coating layer that is formed on one or both surfaces of the porous substrate and contains two or more kinds of inorganic particles having different sizes and a binder,
wherein the binder contains a polymer having a glass transition temperature (Tg) of 100°C to 200°C.

2. The composite porous separator of claim 1, wherein the inorganic particles include first inorganic particles having an average particle diameter (A) of 0.5 to 2 µm, and second inorganic particles having an average particle diameter of A/2 to A/8 of the average particle diameter (A) of the first inorganic particles.

3. The composite porous separator of claim 1, wherein in the inorganic particles, the first inorganic particles are included in an amount of 10 to 40 wt%, and the second inorganic particles are included in an amount of 60 to 90 wt%.

4. The composite porous separator of claim 1, wherein a packing density of the inorganic particles is 1.10 g/m²·µm or more.

5. The composite porous separator of claim 1, wherein a puncture strength of the porous substrate is 3.5 kg·m·s⁻² or more.

6. The composite porous separator of claim 1, wherein the polymer is one or a mixture of two or more selected from an ester-based polymer, a polyamide-based polymer, a polyimide-based polymer, an acrylic polymer, a vinyl alcohol-based polymer, and a vinyl pyrrolidone-based polymer.

7. The composite porous separator of claim 1, wherein in the coating layer, the inorganic particles and the binder are contained in amounts of 50 to 99.9 wt% and 0.1 to 50 wt%, respectively, with respect to a total weight of the coating layer.

8. The composite porous separator of claim 1, wherein a thickness of the coating layer is a thickness of B/2 to B/20 of a thickness (B) of the porous substrate.

9. The composite porous separator of claim 1, wherein a thickness of the coating layer is 0.1 to 10 µm.

10. The composite porous separator of claim 1, wherein a shrinkage rate in a longitudinal direction (MD) or a shrinkage rate in a transverse direction (TD) at 170°C of the composite porous separator is within 5%.

11. An electrochemical device comprising the composite porous separator of claim 1.

12. A method of manufacturing a composite porous separator, the method comprising:
mixing two or more kinds of inorganic particles having different sizes with a polymer having a glass transition temperature (Tg) of 100°C to 200°C to prepare a coating composition; and
applying the coating composition onto one or both surfaces of a porous substrate and drying the coating composition to form a coating layer.

13. The method of claim 12, wherein the inorganic particles include first inorganic particles having an average particle diameter (A) of 0.5 to 2 µm, and second inorganic particles having an average particle diameter of A/2 to A/8 of the average particle diameter (A) of the first inorganic particles.
